# EUROPÄISCHE PATENTSCHRIFT

(11) **EP 0 606 562 B1**
(45) Veröffentlichungstag und Bekanntmachung des Hinweises auf die Patenterteilung: **15.07.1998**
(21) Anmeldenummer: 93118951.8
(22) Anmeldetag: 25.11.1993
(51) Int. Cl.: E04F 19/08

(54) **Rahmen, insbesondere Revisionsrahmen oder Deckelrahmen einer Revisionsabdeckung für Wand- und Deckeneinbau**
Frame, especially inspection frame or cover frame for an inspection cover to be integrated in a wall or ceiling
Cadre, notamment cadre de révision ou bien cadre de couvercle d'une porte de visite pour être intégré dans un mur ou un plafond

(30) Priorität: 09.01.1993 DE 4300436
(43) Veröffentlichungstag der Anmeldung: 20.07.1994
(73) Patentinhaber: OPUS Patent- und Know-How Verwertungsgesellschaft mbH, 14095 Berlin (DE)
(72) Erfinder: Langenhorst, Christoph, D-59494 Soest (DE)
(74) Vertreter: Kietzmann, Manfred

(56) Entgegenhaltungen:
- AU-B- 629 994
- DE-A- 2 757 886
- DE-A- 3 023 960
- DE-B- 1 937 380
- FR-A- 2 240 373
- GB-A- 651 672

## Beschreibung

Die Erfindung betrifft einen Rahmen, insbesondere Revisionsrahmen oder Deckelrahmen einer Revisionsabdeckung für Wand- und Deckeneinbau, aus in den Eckbereichen mittels Eckwinkeln miteinander verbundenen L-förmigen Rahmenprofilen. - Im Rahmen der Erfindung meint Deckelrahmen den Rahmen des in den Revisionsrahmen eingesetzten Revisionsdeckels einer Revisionsabdeckung.

Bei Revisionsabdeckungen sind die Rahmenprofile sowohl für den Revisionsrahmen als auch für den Deckelrahmen regelmäßig als Flachprofile ausgebildet und entweder miteinander verschweißt oder unter Verwendung von flachen Eckwinkeln miteinander vernietet. Aus der Schweißverbindung kann Verzug und folglich ein Präzisionsverlust resultieren, während die Verwendung von Eckwinkeln und Nieten zu Materialaufwand führt. Darüber hinaus lassen sich die Verbindungsarbeiten im allgemeinen nicht vor Ort durchführen, jedenfalls nicht ohne erhebliche Schwierigkeiten, so daß eine umfangreiche Lagerhaltung von Revisionsrahmen und Revisionsdeckeln bzw. Deckelrahmen in vorgefertigten Größen erforderlich ist. - Hier will die Erfindung Abhilfe schaffen.

Der Erfindung liegt die Aufgabe zugrunde, einen Rahmen und insbesondere Revisionsrahmen und/oder Deckelrahmen einer Revisionsabdeckung der eingangs beschriebenen Ausführungsform zu schaffen, deren Rahmenprofile sich einfach, schnell und mit hoher Maßgenauigkeit verbinden lassen, so daß sich die Lagerhaltung auf vorgefertigte Rahmenprofile verschiedener Längen und deren Verbindungsmittel beschränkt.

Diese Aufgabe löst die Erfindung bei einem gattungsgemäßen Rahmen, insbesondere Revisionsrahmen und/oder Deckelrahmen einer Revisionsabdeckung dadurch, daß die Rahmenprofile als L-förmige Profile ausgebildet sind, daß die aus hochstehenden, d.h. nicht in der Wand- oder Deckenebene gelegenen L-Schenkel in ihren Endbereichen jeweils eine ausgeformte Rastzunge aufweisen, und daß jeweils zwei benachbarte im Eckbereich gestoßene Rahmenprofile mittels eines Eckwinkels verbindbar sind, der federelastische Rastschenkel mit die Rastzungen spielfrei hintergreifenden Rastkrallen aufweist. Nach einem Vorschlag der Erfindung mit selbständiger Bedeutung ist vorgesehen, daß bei dem Revisionsrahmen die aus der Rahmenebene hochstehenden L-Schenkel der Rahmenprofile auf der Rahmeninnenseite liegen, daß die Rahmenenden rechtwinkelig ausgebildet sind und mit der inneren Kante ihrer L-Schenkel gestoßen sind, daß die Rastzungen zur Außenseite der L-Schenkel vorkragen, und daß die außenseitig auf die L-Schenkel aufgerasteten Eckwinkel mit einem rechtwinkeligen Füllstück in den jeweils von den Rahmenenden gebildeten Eckbereich mit Paßsitz eingreifen. Nach einem anderen Vorschlag der Erfindung mit selbständiger Bedeutung ist vorgesehen, daß bei dem Deckelrahmen die aus der Rahmenebene hochstehenden L-Schenkel der Rahmenprofile auf der Rahmenaußenseite liegen, daß die Rahmenenden auf Gehrung geschnitten und gestoßen sind, daß die Rastzungen zur Innenseite der L-Schenkel vorkragen, und daß die innenseitig auf die L-Schenkel aufgerasteten Eckwinkel mit einem rechtwinkeligen Füllstück in den jeweils von den L-Schenkeln gebildeten Eckbereich mit Paßsitz eingreifen. - Diese Maßnahmen der Erfindung haben zur Folge, daß sich sowohl Rahmenprofile ohne Gehrungsschnitt als auch Rahmenprofile mit Gehrungsschnitt paßgenau und ohne Parallelverschiebung exakt winkelig zusammenfügen lassen, weil die Paßgenauigkeit und exakte Winkeligkeit sich gleichsam von selbst im Zuge des Aufrastens der Eckwinkel einstellt. Auf ein thermisches Fügen wird im Rahmen der Erfindung ebenso wie auf Nietarbeiten verzichtet. Die Lagerhaltung reduziert sich auf die L-förmigen Rahmenprofile mit rechtwinkeligen oder auf Gehrung geschnittenen Enden, und zwar unter Berücksichtigung der in Frage kommenden Profillängen, so daß die Lagerhaltung durch gleichsam vorgefertigte Halbzeuge erheblich vereinfacht wird. Darüber hinaus lassen sich die Rahmenprofile mit Hilfe der Eck winkel schnell und einfach mit Paßgenauigkeit in Höhe, Breite und Tiefe vor Ort miteinander verbinden, so daß neben dem Materialaufwand auch der Fertigungsaufwand reduziert wird.

Weitere erfindungswesentliche Merkmale sind im folgenden aufgeführt. So sieht die Erfindung vor, daß die auf Gehrung gestoßenen Rahmenprofile im Bereich ihrer außen liegenden Ecken jeweils eine rechtwinkelige Ausnehmung aufweisen und die Eckwinkel mit ihrem Füllstück unter Eckenbildung jeweils in die Ausnehmung mit Paßsitz eingreifen. Bei den rechtwinkeligen Ausnehmungen handelt es sich gleichsam um eine Freistanzung in den außenliegenden Eckbereichen, um dort Zwängungen im Zuge der Verbindung der Rahmenprofile zu vermeiden. Die Rahmenprofile selbst können aus Stahl, NE-Metall, Alu oder Kunststoff bestehen und lassen sich unter Verzicht auf lärmentwickelnde Sägearbeiten durch bloße Stanzarbeiten mit exakten Längen und Rahmenenden herstellen. Erfindungsgemäß sind die Rastzungen aus den L-Schenkeln ausgestanzt oder - bei Kunststoff - ausgeformt und verlaufen unter Bildung einer Kröpfung mit vorgegebenem Abstand parallel zu den L-Schenkeln. Die Eckwinkel können ebenfalls aus Stahl, Metall oder Kunststoff bestehen. Stets ist hinreichende Elastizität gewährleistet um eine Rastsitzverbindung mit Maßgenauigkeit zu erreichen. - Ferner empfiehlt die Erfindung, daß die Rastschenkel der Eckwinkel im wesentlichen die Breite der Rastzungen aufweisen und die Füllstücke der Eckwinkel im wesentlichen die Höhe der L-förmigen Rahmenprofile aufweisen. Auf diese Weise wird ein paßgenaues Fluchten der Rahmenprofile im Wege des Zusammenfügens unterstützt bzw. optimiert. Zweckmäßigerweise fluchten daher auch die Rastkrallen der Eckwinkel mit der Innenseite bzw. Außenseite der L-Schenkel.

Während der Revisionsrahmen nach der Endmontage in Wand oder Decke hinreichend gesichert ist, wird der Deckelrahmen durch seine Beplankung mit Dämmplatten stabilisiert, zumal die Dämmplatten regelmäßig mit dem Deckelrahmen verschraubt werden.

Im folgenden wird die Erfindung anhand einer lediglich ein Ausführungsbeispiel darstellenden Zeichnung näher erläutert; es zeigen:

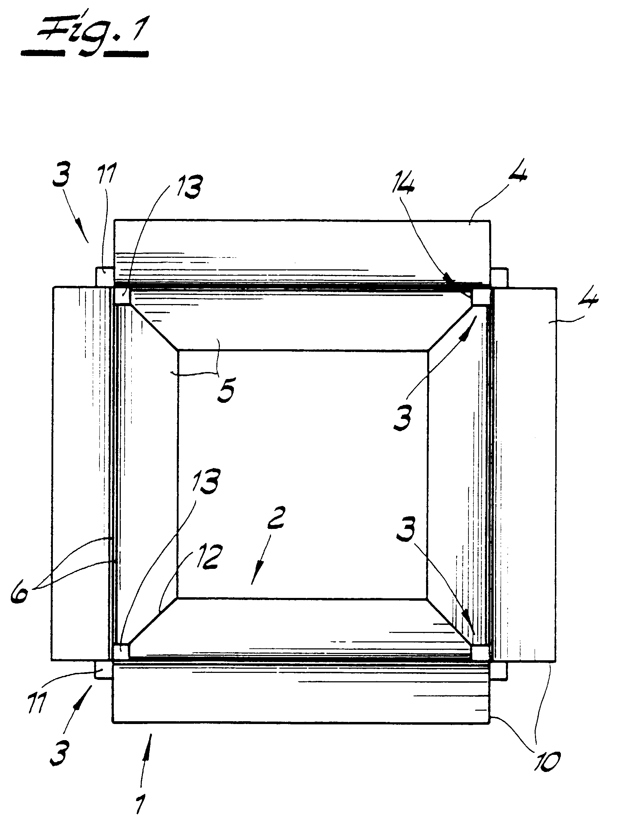

- **Fig. 1**: eine Revisionsabdeckung mit Revisionsrahmen und Revisionsdeckel in schematischer Aufsicht,

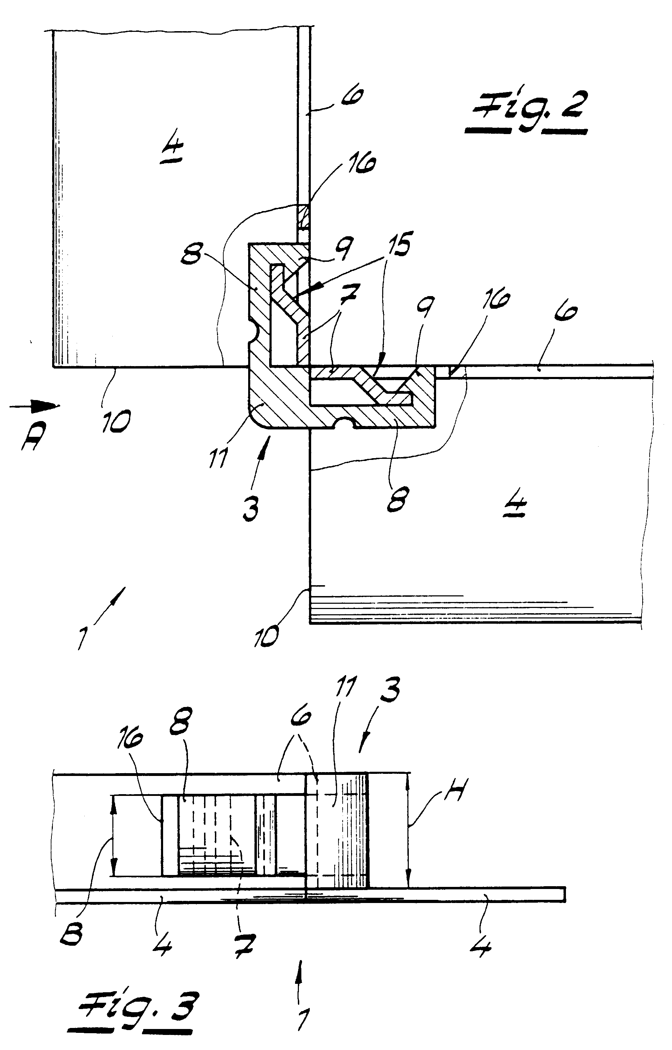

- **Fig. 2**: einen Ausschnitt aus einem Eckbereich des Revisionsrahmens,

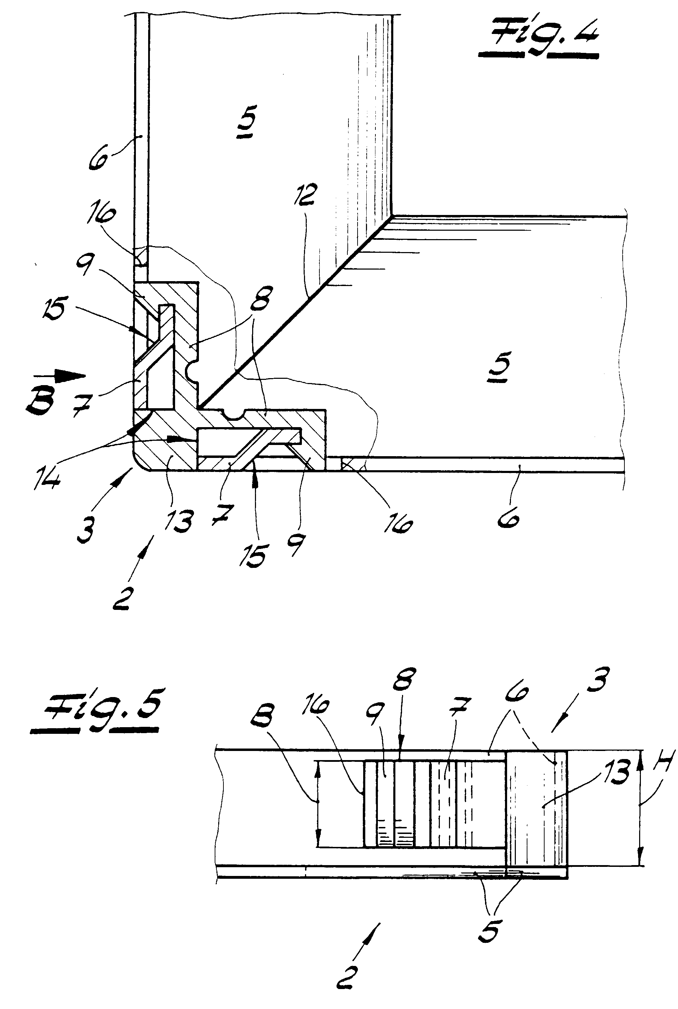

- **Fig. 3**: den Gegenstand nach Fig. 2 in Richtung des Pfeiles A,
- **Fig. 4**: einen Ausschnitt aus dem Eckbereich des Deckelrahmens in Aufsicht und
- **Fig. 5**: den Gegenstand nach Fig. 4 in Ansicht des Pfeiles B.

In den Figuren ist der Revisionsrahmen 1 und Deckelrahmen 2 einer Revisionsabdeckung für Wand- und Deckeneinbau dargestellt. Der Revisionsrahmen 1 und der Deckelrahmen 2 bestehen jeweils aus in den Eckbereichen mittels Eckwinkeln 3 miteinander verbundenen Rahmenprofilen 4, 5. Die Rahmenprofile 4, 5 sind als L-förmige Profile ausgebildet. Die aus der Rahmenebene hochstehenden L-Schenkel 6 weisen in ihren Endbereichen jeweils eine ausgeformte Rastzunge 7 auf. Jeweils zwei benachbarte im Eckbereich gestoßene Rahmenprofile 4 bzw. 5 sind mittels eines Eckwinkels 3 verbunden, der federelastische Rastschenkel 8 mit die Rastzungen 7 spielfrei hintergreifenden Rastkrallen 9 aufweist.

Bei dem Revisionsrahmen 1 liegen die aus der Rahmenebene hochstehenden L-Schenkel 6 der Rahmenprofile 4 auf der Rahmeninnenseite. Die Rahmenenden 10 sind rechtwinkelig ausgebildet und mit der inneren Kante L-Schenkel 6 gestoßen. Die Rastzungen 7 kragen zur Außenseite der L-Schenkel 6 hin vor. Die außenseitig auf die L-Schenkel 6 aufgerasteten Eckwinkel 3 greifen mit einem rechtwinkeligen Füllstück 11 in den jeweils von den Rahmenenden 10 gebildeten Eckbereich mit Paßsitz ein.

Bei dem Deckelrahmen 2 liegen die aus der Rahmenebene hochstehenden L-Schenkel 6 der Rahmenprofile 5 auf der Rahmenaußenseite. Die Rahmenenden sind auf Gehrung 12 geschnitten und gestoßen. Die Rastzungen 7 kragen zur Innenseite der L-Schenkel 6 vor. Die innenseitig auf die L-Schenkel 6 aufgerasteten Eckwinkel 3 greifen mit einem rechtwinkeligen Füllstück 13 in den jeweils von den L-Schenkeln 6 gebildeten Eckbereich mit Paßsitz ein. Nach dem Ausführungsbeispiel weisen die auf Gehrung 12 gestoßenen Rahmenprofile 5 im Bereich ihrer außenliegenden Ecken jeweils eine freigeschnittene rechtwinkelige Ausnehmung 14 auf, wobei die Eckwinkel 3 mit ihrem Füllstück 13 unter Eckenbildung jeweils in diese Ausnehmung 14 mit Paßsitz eingreifen. Die Rahmenprofile 4, 5 sind als Aluminiumprofile ausgebildet. Die Rastzungen 7 sind aus den L-Schenkeln 6 ausgestanzt und verlaufen unter Bildung einer Kröpfung 15 mit vorgegebenem Abstand parallel zu den L-Schenkeln 6. Die Eckwinkel 3 bestehen aus feuerfestem Kunststoff. Die Rastschenkel 8 der Eckwinkel 3 weisen im wesentlichen die Breite B der Rastzungen 7 auf. Die Füllstücke 11, 13 der Eckwinkel 3 weisen im wesentlichen die Höhe H der L-förmigen Rahmenprofile 4, 5 auf und fluchten folglich mit den Rahmenprofilen, während die Rastkrallen 9 der Eckwinkel 3 mit der Innenseite bzw. Außenseite der L-Schenkel 6 fluchten, weil sie teilweise in die durch das Ausstanzen der Rastzungen 7 erzeugten Fenster 16 eingreifen.

## Patentansprüche

1. Rahmen, insbesondere Revisionsrahmen oder Deckelrahmen einer Revisionsabdeckung für Wand- und Deckeneinbau, aus in den Eckbereichen mittels Eckwinkel miteinander verbundenen L-förmigen Rahmenprofilen, **dadurch gekennzeichnet**, daß die hochstehenden, d. h. nicht in der Wand- oder Deckenebene gelegenen L-Schenkel (6) der Rahmenprofile (4, 5) in ihren Endbereichen jeweils eine ausgeformte Rastzunge (7) aufweisen und daß jeweils zwei benachbarte im Eckbereich gestoßene Rahmenprofile (4 bzw. 5) mittels eines Eckwinkels (3) verbunden sind, der federelastische Rastschenkel (8) mit die Rastzungen (7) hintergreifenden Rastkrallen (9) aufweist.

2. Rahmen nach Anspruch 1, dadurch gekennzeichnet, daß bei dem Revisionsrahmen (1) die hochstehenden L-Schenkel (6) der Rahmenprofile (4) auf der Rahmeninnenseite liegen, daß die Rahmenenden (10) rechtwinkelig ausgebildet sind und mit der inneren Kante ihrer L-Schenkel (6) gestoßen sind, daß die Rastzungen (7) zur Außenseite der L-Schenkel (6) vorkragen, und daß die außenseitig auf die L-Schenkel (6) aufgerasteten Eckwinkel (3) mit einem rechtwinkeligen Füllstück (11) in den jeweils von den Rahmenenden (10) gebildeten Eckbereich mit Paßsitz eingreifen.

3. Rahmen nach Anspruch 1, dadurch gekennzeichnet, daß bei dem Deckelrahmen (2) die hochstehenden L-Schenkel (6) der Rahmenprofile (5) auf der Rahmenaußenseite liegen, daß die Rahmenenden auf Gehrung (12) geschnitten und gestoßen sind, daß die Rastzungen (7) zur Innenseite der L-Schenkel (6) vorkragen und daß die innenseitig auf die L-Schenkel (6) aufgerasteten Eckwinkel (3) mit einem rechtwinkeligen Füllstück (13) in den jeweils von den L-Schenkeln (6) gebideten Eckbereich mit Paßsitz eingreifen.

4. Rahmen nach einem der Ansprüche 1 oder 3, dadurch gekennzeichnet, daß die auf Gehrung (12) gestoßenen Rahmenprofile (5) im Bereich ihrer außenliegenden Ecken jeweils eine rechtwinkelige Ausnehmung (14) aufweisen und die Eckwinkel (3) mit ihrem Füllstück (13) unter Eckenbildung jeweils in die Ausnehmung (14) mit Paßsitz eingreifen.

5. Rahmen nach einem der Ansprüche 1 bis 4, dadurch gekennzeichnet, daß die Rahmenprofile (4, 5) aus Stahl, NE-Metall, Aluminium oder Kunststoff bestehen.

6. Rahmen nach einem der Ansprüche 1 bis 5, dadurch gekennzeichnet, daß die Rastzungen (7) aus den L-Schenkeln (6) ausgestanzt oder ausgeformt sind und unter Bildung einer Kröpfung (15) mit vorgegebenem Abstand prallel zu den L-Schenkeln (6) verlaufen.

7. Rahmen nach einem der Ansprüche 1 bis 6, dadurch gekennzeichnet, daß die Eckwinkel (3) aus Stahl, Metall oder Kunststoff bestehen.

8. Rahmen nach einem der Ansprüche 1 bis 7, dadurch gekennzeichnet, daß die Rastschenkel (8) der Eckwinkel im wesentlichen die Breite der Rastzungen (7) aufweisen.

9. Rahmen nach einem der Ansprüche 1 bis 8, dadurch gekennzeichnet, daß die Füllstücke (11, 13) der Eckwinkel (3) im wesentlichen die Höhe der L-förmigen Rahmenprofile (4, 5) aufweisen.

10. Rahmen nach einem der Ansprüche 1 bis 9, dadurch gekennzeichnet, daß die Rastkrallen (9) der Eckwinkel (3) mit der Innenseite bzw. Außenseite der L-Schenkel (6) fluchten.

## Claims

1. Frame, especially inspection or cover frame of an inspection cover for an opening in a wall or ceiling, comprising L-section members forming limbs of the frame and meeting one another at corners of the frame by means of comer elements, characterized in that the projecting L shanks (flanges) (6) of the frame members (4, 5) being not coplanar with the wall or ceiling have a respective resilient locking tongue (7) at each end thereof, and that two adjacent frame members (4 or 5) each which are joined together at their corners by corner angles or elements (3), having angularly adjoining resilient locking shanks (8) formed with locking hooks (9), each of the hooks engaging a respective one of the said tongues.

2. Frame according to Claim 1, characterized in that for said inspection frame (1) the projecting L shanks (flanges) (6) of the frame members (4) are oriented along an interior of the frame, said frame members have ends (10) lying at right angles to said flanges, said flanges adjoin at said corners at inner edges of their flanges (6), and said locking tongues (7) project toward the outer side of the flanges (6), said comer elements (3) being located outwardly of the flanges (6) and having a rectangular solid filling body (solid body portion) (11) with flanks adjoining at a right angle, tightly fitting against the said ends (10) of the members at the respective corners.

3. Frame according to Claim 1, characterized in that for the cover frame (2), the projecting flanges (6) of the frame members (5) are oriented along an exterior of the frame, said members have mitered ends (12) lying at angles to said flanges, said locking tongues (7) are bent out of the respective flanges (6) inwardly, said corner elements (3) being located between the flanges (6) and having solid rectangular filling bodies (13) with flanks adjoining at a right angle, tightly fitting against the ends of the flanges (6) at the respective corners.

4. Frame according to Claim 1 or 3, characterized in that the frame members (5) which abut at respective miters (12) at each corner, have an outermost corner at their junction formed with a rectangular cutout (14), and the comer elements (3) with their filling bodies (13) project into the cutout (14) forming corners and being received with a tight fit.

5. Frame according to one of Claims 1 to 4, characterized in that the frame members (4, 5) are composed of steel, nonferrous metal, aluminium or plastic.

6. Frame according to one of Claims 1 to 5, characterized in that each of the tongues (7) is molded or stamped unitarily from the respective flanges (6) with an offset (15) and a free end spaced from but parallel to the respective flanges (6).

7. Frame according to one of Claims 1 to 6, characterized in that each of the corner elements (3) is composed of steel, another metal or a plastic.

8. Frame according to one of Claims 1 to 7, characterized in that the locking shanks (8) of the corner elements are substantially of the same width as said locking tongues (7).

9. Frame according to one of Claims 1 to 8, characterized in that the filling bodies (11, 13) of the corner elements (3) are substantially of the same height as said L section frame members (4, 5).

10. Frame according to one of Claims 1 to 9, characterized in that the locking hooks (9) of the comer elements (3) are flush with the internal or external surfaces of said flanges (6).

## Revendications

1. Cadre, en particulier cadre d'inspection ou cadre de couvercle d'une couverture d'inspection destiné à être monté dans un mur ou un plafond, fait de profilés en L assemblés entre eux dans les zones d'angles, au moyen d'équerres, caractérisé en ce que les branches en L (6) surélevées, c'est-à-dire non posées dans le plan du mur ou du plafond, des profilés (4, 5) du cadre, présentent chacune dans leurs zones d'extrémité une languette d'encliquetage (7) façonnée et en ce que deux profilés de cadre (4 ou 5) voisins, jointifs dans la zone d'angle, sont assemblés au moyen d'une équerre (3) qui présente des ailes d'encliquetage (8) élastiques, avec des griffes d'encliquetage (9) passant derrière les languettes d'encliquetage (7).

2. Cadre selon la revendication 1, caractérisé en ce que dans le cadre d'inspection (1), les branches en L (6) surélevées des profilés (4) du cadre, se situent sur le côté intérieur du cadre, en ce que les extrémités (10) du cadre sont à angle droit et sont jointives avec le bord intérieur de leurs branches en L (6), en ce que les languettes d'encliquetage (7) font saillie vers le côté extérieur des branches en L (6), et en ce que l'équerre (3), encliquetée sur le côté extérieur des branches en L (6), s'engage avec ajustement fin, par une pièce de remplissage (11) à angle droit dans la zone d'angle formée par les extrémités (10) du cadre.

3. Cadre selon la revendication 1, caractérisé en ce que dans le cadre de couvercle (2), les branches en L (6) surélevées des profilés de cadre (5) se situent sur le côté extérieur du cadre, en ce que les extrémités du cadre sont coupées en onglet (12) et sont mises bout à bout, en ce que les languettes d'encliquetage (7) font saillie vers le côté intérieur des branches en L (6) et en ce que les équerres (3) encliquetées sur le côté intérieur des branches en L (6) s'engagent avec ajustement fin, par une pièce de remplissage (13) à angle droit, dans la zone d'angle formée par les branches en L (6).

4. Cadre selon l'une des revendications 1 ou 3, caractérisé en ce que les profilés (5) du cadre mis bout à bout en onglet (12), présentent chacun un évidement (14) à angle droit dans la zone de leurs angles extérieurs et les équerres (3) s'engagent avec ajustement fin, par leur pièce de remplissage (13) en formant l'angle, dans l'évidement (14).

5. Cadre selon l'une des revendications 1 à 4, caractérisé en ce que les profilés (4, 5) du cadre sont en acier, en métal non ferreux, en aluminium ou en matière plastique.

6. Cadre selon l'une des revendications 1 à 5, caractérisé en ce que les languettes d'encliquetage (7) sont découpées ou formées dans les branches en L (6) et s'étendent parallèlement aux branches en L (6), en formant un coude (15), à une distance donnée.

7. Cadre selon l'une des revendications 1 à 6, caractérisé en ce que les équerres (3) sont en acier, en métal ou en matière plastique.

8. Cadre selon l'une des revendications 1 à 7, caractérisé en ce que les branches d'encliquetage (8) des équerres présentent sensiblement la largeur des languettes d'encliquetage (7).

9. Cadre selon l'une des revendications 1 à 8, caractérisé en ce que les pièces de remplissage (11, 13) des équerres (3) présentent sensiblement la hauteur des profilés (4, 5) en L du cadre.

10. Cadre selon l'une des revendications 1 à 9, caractérisé en ce que les griffes d'encliquetage (9) des équerres (3) sont alignées avec le côté intérieur ou le côté extérieur des branches en L (6).
